# FASCICULE DE BREVET EUROPEEN

(11) **EP 1 816 620 B1**
(45) Date de publication et mention de la délivrance du brevet: **10.08.2011**
(21) Numéro de dépôt: 07002157.1
(22) Date de dépôt: 01.02.2007
(51) Int. Cl.: G08C 17/02, H04L 12/28

(54) **Procédé de communication par relais entre une télécommande nomade et des équipements domotiques**
Kommunikationsverfahren zwischen einer Fernbedienung und Haushaltsgeräten über ein Relais
Method for communicating between a remote control and home appliances using a relay

(30) Priorité: 06.02.2006 FR 0601056
(43) Date de publication de la demande: 08.08.2007
(60) Demande divisionnaire: 10179331.3
(73) Titulaire: Somfy SAS, 74300 Cluses (FR)
(72) Inventeur: Bejean, Alain, 74540 Gruffy (FR); Maugain, Denis, 74330 Poisy (FR); Lagarde, Eric, 74700 Sallanches (FR)
(74) Mandataire: Bugnion Genève

(56) Documents cités:
- WO-A-01/95283
- US-A1- 2004 203 387
- US-A1- 2005 110 652
- US-A1- 2005 162 282

## Description

L'invention concerne un procédé de fonctionnement d'une installation domotique comprenant une télécommande nomade, un relais et des équipements domotiques et dans laquelle au moins certains équipements domotiques peuvent recevoir par voie non filaire des ordres de commande émis par la télécommande nomade. L'invention concerne également une installation domotique fonctionnant selon ce procédé.

Dans le domaine de la domotique, il est possible à un utilisateur de commander à distance, de manière non filaire, différents équipements électriques équipant les ouvertures d'un bâtiment (par exemple des volets roulants motorisés, des portes de garage motorisées, des serrures motorisées) grâce notamment à des télécommandes émettant des ordres de commande par ondes électromagnétiques et notamment radioélectriques.

On note dans ce domaine et dans des domaines voisins liés à la commande d'équipements Hi-Fi et vidéo, une volonté d'améliorer le confort de l'utilisateur et de simplifier les commandes. Ainsi, des boutons de commande de type scénario sont disponibles au niveau des télécommandes. Elles permettent de commander selon un schéma prédéfini non seulement les équipements Hi-Fi et vidéo, mais également le niveau lumineux dans la pièce dans laquelle se trouvent les équipements. Pour enregistrer ces scénarii, différents procédés de configuration sont connus dans l'état de l'art.

L'utilisateur bénéficie, au niveau de la télécommande, d'un bouton ou d'un ensemble de boutons, coopérant éventuellement avec une interface utilisateur de type écran. Grâce à ces moyens, il est capable d'appeler un scénario mis en mémoire et de commander son exécution.

Un exemple de scénario est un scénario lié à un départ de l'utilisateur. Selon ce scénario, lorsqu'un utilisateur quitte son domicile, il souhaite que l'ensemble des équipements électriques de son domicile s'éteigne, voire que ses accès se verrouillent.

On connaît du brevet US 6,297,746, un système domotique commandé grâce à une centrale de commande disposant d'un bouton nommé « All-off ». Un simple appui sur ce bouton permet d'éteindre tous les équipements non nécessaires. De la même manière, un bouton spécifique dédié à un départ de l'utilisateur peut être prévu. Cette centrale de commande peut être portable. Elle est relativement complexe dans la mesure où elle permet de commander un ensemble très hétérogène d'équipements. Du fait qu'elle communique, lors de certaines manipulations, avec un grand nombre d'équipements, elle doit disposer de ressources d'alimentation et de traitement d'informations importantes. Enfin, du fait de son caractère portable, on n'est pas sûr au moment où on la manipule pour commander un grand nombre d'équipements de se trouver à portée de l'ensemble de ces équipements.

On connaît en outre de la demande US 2004/0203387 un système domotique comprenant une télécommande, un relais et des équipements électriques. Les équipements électriques sont commandés par la télécommande via le relais. Les ordres de commandes sont définis au niveau de la télécommande et seulement reformulés au niveau du relais. Ainsi, la télécommande ne génère pas d'ordre de lancement d'un scénario mais plutôt une série de commandes qui sont émises vers le relais puis dispatchées vers les équipements concernés depuis ce-dernier. De plus, dans ce document, la télécommande ne peut a priori pas commander directement les équipements.

on connait aussi de la demande US2005/0110652 un système comprenant une télécommande, un relais et des équipements électriques. Les éléments électriques sont commandés par la télécommande via le relais. Le relais est capable d'exécuter différentes macros sur réception d'un code de la part de la télécommande.

Le but de l'invention est de fournir un procédé de communication remédiant aux inconvénients précités et améliorant les procédés connus de l'art antérieur. En particulier, l'invention propose un procédé simple permettant de simplifier la commande d'un scénario dans le domaine de la commande à distance des ouvertures et fermetures des accès à un bâtiment, tout en offrant une large gamme de possibilités.

Le procédé de fonctionnement selon l'invention est défini par la revendication 1.

Différents modes d'exécution du procédé de fonctionnement sont définis par les revendications dépendantes 2 à 11.

L'installation domotique selon l'invention est définie par les revendications 12 à 14.

Le relais peut comprendre des moyens pour traduire un ordre de commande spécifique d'exécution du scénario en différents ordres de commande à l'attention des équipements domotiques.

Le dessin annexé représente, à titre d'exemples, un mode de réalisation d'une installation domotique selon l'invention et un mode d'exécution d'un procédé de fonctionnement de cette installation.

La figure 1 est un schéma d'un mode de réalisation de l'installation domotique selon l'invention.

La figure 2 est un ordinogramme d'un mode d'exécution du procédé de fonctionnement de l'installation.

Les figures 3 à 5 sont des variantes du mode d'exécution du procédé de fonctionnement de l'installation.

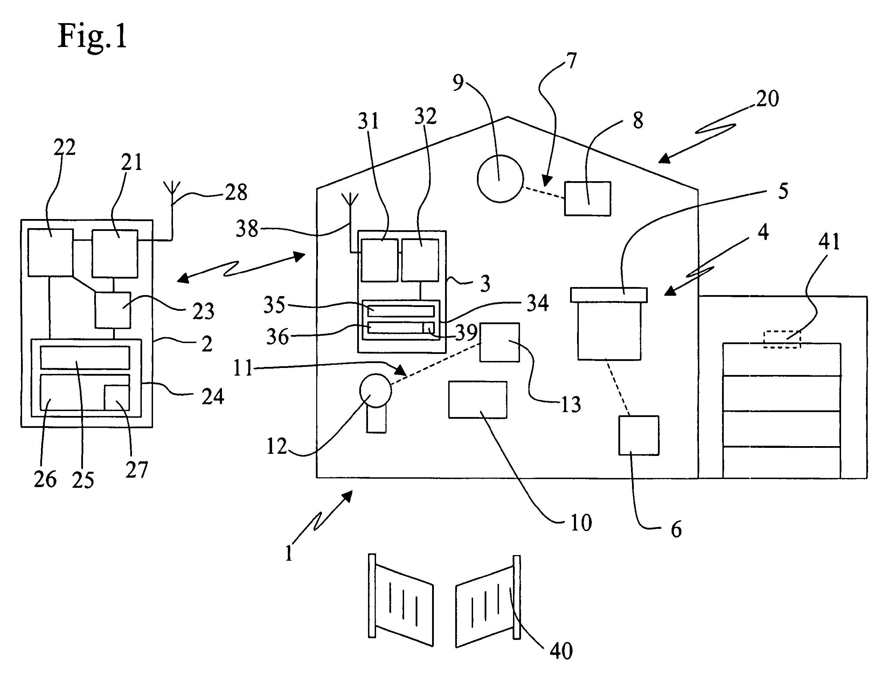

L'installation domotique 1, représentée à la figure 1, comprend principalement une télécommande nomade 2, un relais 3 et un ensemble d'équipements domotiques 4, 7, 10 et 11 équipant un bâtiment 20.

La télécommande nomade 2 comprend un émetteur-récepteur 21 d'ordres de commande sous forme d'ondes électromagnétiques et une antenne associée 28. Elle est alimentée par une source électrique interne 23 (par exemple une pile). Elle comprend également une interface utilisateur 24 munie d'un ensemble 26 de boutons de commande sur lesquels des actions déclenchent des émissions d'ordres de commande directs et individuels à différents équipements. Un microcontrôleur 22 est relié à l'émetteur-récepteur 21 et à l'interface utilisateur 24. Par exemple, il peut s'agir d'une télécommande d'accès permettant de commander l'ouverture et la fermeture d'un portail, l'ouverture et la fermeture d'une porte de garage, l'allumage et l'extinction d'une porte d'un éclairage extérieur et le verrouillage et le déverrouillage d'une serrure de porte d'entrée.

La télécommande est de préférence de petit format, afin qu'elle puisse être facilement emportée, notamment avec un trousseau de clé.

La télécommande nomade comprend également un moyen 25 d'information de l'utilisateur, permettant de transcrire de manière visible pour l'utilisateur, la bonne exécution d'un ordre de commande, en particulier lorsque l'équipement commandé n'est pas visible pour l'utilisateur depuis l'endroit où il se trouve. Deux diodes électroluminescentes de couleurs différentes (par exemple verte et orange) ou une diode électroluminescente bicolore peuvent être utilisées à cet effet.

La télécommande comprend également au moins un bouton 27 permettant de commander l'exécution d'un scénario. On désigne ce bouton par la dénomination « bouton maison ». La télécommande peut comprendre d'autres boutons permettant de commander l'exécution de scénarii.

Pour communiquer avec les différents équipements électriques de la maison cités ci-dessus, la télécommande est préalablement appairée avec ces équipements, c'est-à-dire qu'un identifiant est échangé pour permettre de créer un lien de communication entre la télécommande et les équipements et reconnaître à qui s'adressent et d'où proviennent les informations émises que celles-ci soient des ordres de commande ou tout autre type de message.

Par ailleurs, la télécommande est appairée avec le relais 3 situé préférentiellement à l'intérieur du bâtiment. Ce relais comprend un émetteur-récepteur 31 d'ordres de commande sous forme d'ondes électromagnétiques et une antenne associée 38. Il comprend également une interface utilisateur 34 munie d'un ensemble 36 de boutons de configuration et d'un moyen 35 d'information de l'utilisateur tel qu'un écran. Un microcontrôleur 32 est relié à l'émetteur-récepteur 31 et à l'interface utilisateur 34.

Le relais est lui-même appairé avec un certain nombre d'équipements, pouvant être différents ou communs avec ceux avec lesquels la télécommande est appairée. On fait l'hypothèse que le relais est appairé avec un dispositif de serrure motorisée 11 comprenant une serrure et un capteur 13, un dispositif de volet roulant motorisé 4 comprenant un volet roulant 5 et un capteur 6, un système d'alarme 10, un dispositif d'éclairage 7 comprenant une lampe 9 et un capteur 8, un dispositif de portail motorisé 40 et un dispositif de porte de garage motorisée 41.

Dans le cas décrit, la télécommande est par exemple appairée au portail motorisé, à la porte de garage motorisée et à l'alarme.

Le relais est disposé dans un boîtier et peut communiquer de manière non filaire avec les équipements avec lequel il est appairé.

Des appuis sur des boutons de commande de la télécommande permettent de commander directement les équipements qui sont appairés à la télécommande.

Un appui sur le bouton maison a pour effet l'émission par la télécommande d'un ordre spécifique de commande à l'attention du relais. Le relais interprète cet ordre spécifique de commande comme un ordre de lancement de scénario et le traduit en des ordres de commande qu'il émet à l'attention de différents équipements pour remplir les fonctions de scénario attendues par l'utilisateur.

Selon un premier mode de fonctionnement de l'installation domotique, l'ordre spécifique de commande est un ordre général de fermeture des équipements motorisés et/ou un ordre d'extinction des autres équipements électriques. Le relais reçoit l'ordre de commande puis se contente de le répéter aux différents équipements auxquels il est appairé et qui sont concernés par le scénario. Dans la mesure où les équipements appairés au relais peuvent être différents de ceux appairés à la télécommande, il est possible de créer un scénario incluant le mouvement ou la réaction de divers équipements qui ne sont pas commandés directement par la télécommande. Ainsi, au moment du départ de l'utilisateur, lorsque celui-ci appuie sur le bouton maison, les volets roulants se ferment, les lumières s'éteignent, la porte de garage et le portail se ferment. Dans la mesure où, seul le relais connaît les équipements concernés par le scénario, ce scénario est défini au niveau du relais.

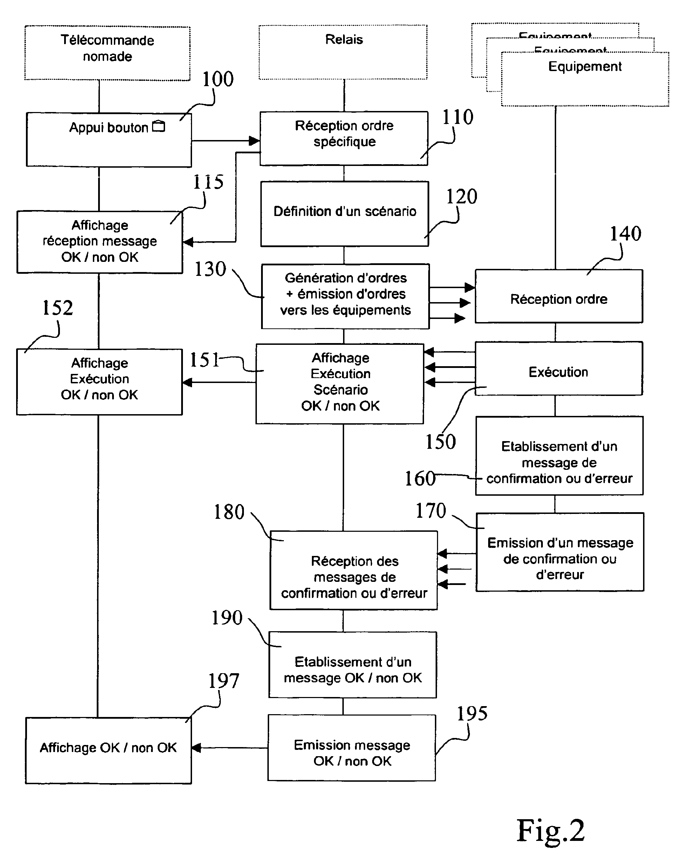

Selon un deuxième mode de fonctionnement de l'installation domotique, le microcontrôleur 32 du relais permet de générer des ordres de commande adressés aux différents équipements en réponse à l'ordre de commande spécifique que le relais a reçu. L'ordre de commande spécifique en provenance de la télécommande nomade s'adresse toujours directement au relais avec lequel elle est appairée. Les différentes étapes de la communication sont décrites ci-après en référence à la figure 2.

Dans une première étape 100, l'utilisateur appuie sur le bouton maison de la télécommande. Celle-ci émet alors par l'intermédiaire de son émetteur d'ondes électromagnétiques un ordre spécifique de commande.

Dans une étape 110, le relais reçoit cet ordre. Il peut éventuellement ensuite émettre un message d'accusé de réception qui est reçu par la télécommande nomade et signalé à l'utilisateur dans une étape 115. La télécommande peut afficher un message d'erreur si elle ne reçoit pas de message d'accusé de réception dans un délai prédéfini. Une fois l'ordre de commande spécifique reçu par le relais, celui-ci bascule alors dans une étape 120 de définition d'un scénario. Ce scénario peut être fonction d'un ensemble de paramètres prédéfinis au niveau du relais, par exemple lors de sa configuration. Des exemples détaillés de définitions de scénarios seront décrits plus bas.

La définition du scénario conduit, dans une étape 130, à générer et à émettre un certain nombre d'ordres de commande à destination de divers équipements auxquels il est appairé et qui sont concernés par le scénario. Ces ordres peuvent être spécifiques à chaque équipement ou à des groupes d'équipements.

Dans une étape 140, un ordre de commande en provenance du relais est reçu par les différents équipements domotiques. Cet ordre est, si possible, exécuté dans une étape 150. Si les équipements disposent d'un émetteur-récepteur d'ordres bidirectionnel, ils peuvent émettre un message signalant que les ordres de commande sont en cours d'exécution et ce message peut être retransmis du relais à la télécommande nomade. Dans des étapes 151 et 152, les informations sont signalées à l'utilisateur par les différents moyens prévus sur le relais et sur la télécommande.

Si les équipements disposent d'un émetteur-récepteur d'ordres bidirectionnel, ils peuvent aussi éventuellement générer, dans une étape 160, et émettre, dans une étape 170, un message d'information pour confirmer :
- que l'ordre a bien été reçu,
- que l'ordre a bien été exécuté,
- ou au contraire qu'un événement a empêché l'exécution de cet ordre.

Dans une étape 180, le relais reçoit les messages d'information en provenance des équipements concernés par le scénario. Dans une étape 190, il établit un message d'information à l'attention de la télécommande, ce message reprenant de manière générale l'ensemble des messages d'information émis par les équipements. Ce message peut être de manière basique, un message positif lorsque tous les équipements concernés par le scénario ont confirmé que l'ordre qu'ils avaient reçu a bien été exécuté, et un message négatif lorsqu'au moins un des équipements a signalé une erreur dans l'exécution de l'ordre.

Dans une étape 195, ce message d'information simplifié est émis par le relais à destination de la télécommande. Dans une étape 197, ce message d'information signale à l'utilisateur la bonne ou la mauvaise exécution du scénario par le biais du moyen d'information. Une bonne exécution peut être traduite par l'allumage de la diode verte et une mauvaise exécution peut être traduite par l'allumage de la diode orange. Tout autre moyen ou combinaison de moyens connus d'affichage d'information peut encore être utilisée.

Alternativement, le message d'information émis par le relais à l'attention de la télécommande peut être plus évolué. Ainsi, par exemple, le message d'information peut contenir une information sur la bonne ou mauvaise réception et également sur la bonne ou mauvaise exécution des ordres du scénario. Les causes d'erreur peuvent également être signalées.

Préférentiellement, le relais comprend également des moyens d'affichage, plus évolués que ceux de la télécommande. Ces moyens peuvent avantageusement être utilisés par l'utilisateur dans le cas où un scénario n'a pas été exécuté afin de comprendre d'où vient le problème. Les moyens d'affichage peuvent n'être utilisés que sur requête de l'utilisateur. Ces moyens d'affichage peuvent également être utilisés pour configurer le relais.

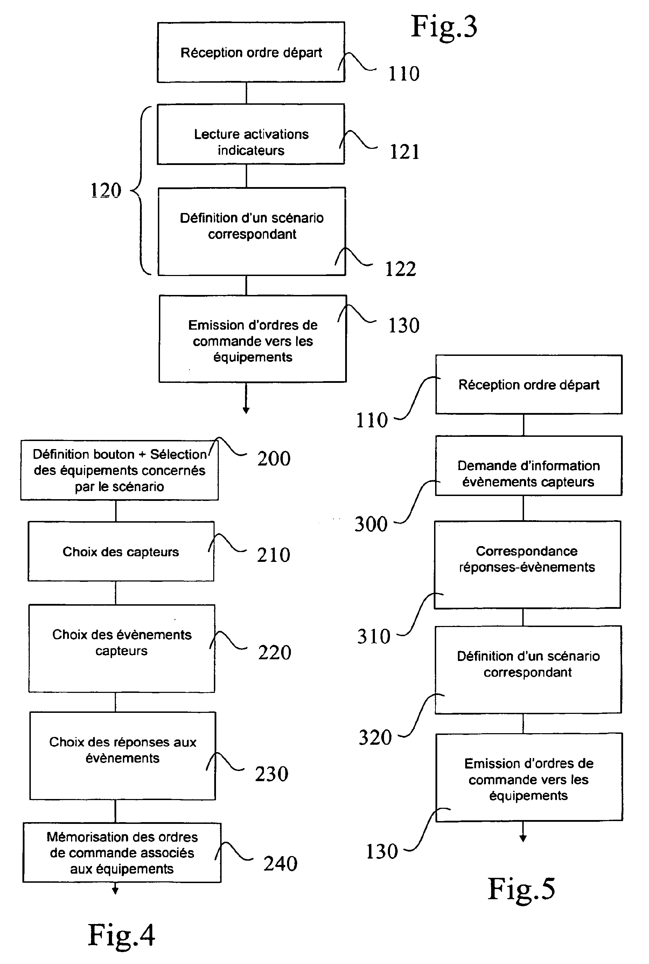

Une première variante de définition d'un scénario au niveau du relais est décrit ci-après en référence à la figure 3.

Dans cette première variante, on suppose que, le relais comprend une interface utilisateur avec des boutons ou des contacts, sur lesquels l'utilisateur peut agir pour sélectionner certains états. Par exemple, le boîtier relais dispose d'un sélecteur de scénario 39 permettant de sélectionner un scénario particulier, tel que par exemple :
- un scénario « fermeture complète »,
- un scénario « fermeture partielle avec alarme »,
- un scénario « alarme uniquement ».
Pour simplifier l'utilisation de l'installation, un scénario de départ est mis en mémoire par défaut dans le relais.

En temps normal, l'utilisateur choisit le scénario « fermeture partielle avec alarme ». Un appui sur le bouton maison de la télécommande provoque alors une fermeture des accès (portes, porte de garage), alors que les volets restent ouverts. L'alarme est mise en route et l'ensemble peut fonctionner comme décrit dans le document EP 1 405 280.

Par contre, il peut sélectionner, avant un départ en vacances, d'activer le scénario « fermeture complète ». Au moment du départ, un seul appui sur le même bouton maison de la télécommande déclenche alors une fermeture générale des accès, des volets roulants et la mise sous alarme du bâtiment.

Alternativement, l'utilisateur peut aussi choisir de sélectionner le scénario « alarme uniquement » pour ne faire fonctionner que l'alarme à l'extérieur du bâtiment, par exemple s'il reste dans son domicile.

Dans cette première variante, après l'étape 110 de réception de l'ordre de commande déjà décrite précédemment, le relais lit dans une étape 121 l'état de son sélecteur de scénario. Dans une étape 122, il détermine le scénario qui doit être commandé. Une fois ce scénario déterminé, dans une étape 130 déjà décrite plus haut, le relais génère et émet les ordres de commande nécessaires à sa mise en oeuvre.

Une deuxième variante de définition d'un scénario au niveau du relais est décrit ci-après en référence aux figures 4 et 5.

Le relais est par exemple configuré comme décrit ci-après. Dans une étape 200, on définit le contexte d'un scénario. On définit en particulier dans cette étape, une association entre le bouton maison de la télécommande et le scénario défini dans le relais et on sélectionne les équipements domotiques concernés par le scénario. Outre cette sélection des équipements, qui est faite de manière connue ou tout simplement regroupe tous les équipements appairés au relais, l'utilisateur peut associer un ou plusieurs capteurs ou automatismes, internes au relais ou éventuellement utilisés dans le bâtiment par exemple par des équipements domotiques.

Dans une étape 210, si l'on considère l'installation de la figure 1, l'utilisateur peut par exemple sélectionner le capteur 6 associé au volet roulant ou le capteur 8 associé au dispositif d'éclairage 7. Le capteur 6 peut par exemple être un automatisme intégrant une horloge, pour piloter le volet roulant en fonction de l'heure de la journée. Le capteur 8 combine par exemple un capteur de présence et un capteur de luminosité. Lors de cette configuration, des liens fonctionnels sont établis entre ces capteurs et le relais, de sorte que celui-ci puisse également recevoir les données mesurées par ces capteurs.

Dans une étape 220, l'utilisateur choisit des événements qui seront utilisés pour définir le scénario et qui peuvent être détectés par les capteurs sélectionnés, par exemple un horaire particulier, un seuil de luminosité.

Dans une étape 230, l'utilisateur associe à ces événements des réponses, c'est-à-dire une ou plusieurs actions à exécuter par un ou plusieurs équipements.

Dans une étape 240, on mémorise les ordres de commande à associer aux équipements domotiques.

Une fois le relais configuré, il est apte à fonctionner.

Ce fonctionnement est décrit en référence à la figure 5.

Après l'étape 110 de réception de l'ordre de commande déjà décrite précédemment, le relais envoie, dans une étape 300, aux différents capteurs sélectionnés, un message d'interrogation pour déterminer les événements courants susceptibles d'avoir une influence sur le scénario. Par exemple, avant une heure prédéterminée, un scénario de départ entraîne simplement un verrouillage des accès et une activation de l'alarme, alors qu'après cette heure, le scénario de départ entraîne non seulement un verrouillage des accès et une activation de l'alarme, mais également une fermeture des volets roulants.

Dans une étape 310, une fois que les événements sont connus du relais, celui-ci recherche dans sa mémoire les correspondances entre ces événements et les réponses qui ont été préalablement définies.

Dans une étape 320, le relais définit le scénario, c'est-à-dire détermine les ordres de commande à émettre vers les différents équipements concernés par le scénario.

Une fois ce scénario déterminé, dans une étape 130 déjà décrite plus haut, le relais émet les ordres de commande nécessaires à sa mise en oeuvre.

Ainsi, suite à un même appui sur le bouton maison de la télécommande, une multitude de scénarii peuvent être mis en oeuvre, sans qu'une autre intervention de l'utilisateur ne soit nécessaire (hors des étapes de configuration de l'installation).

Avantageusement, les deux variantes de définition d'un scénario décrites en référence aux figures 3 et 5 peuvent être combinées. En effet, le relais peut définir un scénario en fonction d'une part de données fournies par des capteurs et, d'autre part, de l'état d'un sélecteur de scénario prévu sur le relais.

D'autres variantes, liées à l'utilisation d'un relais au niveau duquel sont définis les ordres à transmettre à des équipements, suite à la réception d'une commande spécifique de commande provenant de la télécommande nomade, sont bien entendu possibles.

L'utilisation d'un relais dans l'installation décrite permet de faire des économies de ressources de la télécommande nomade (en terme d'alimentation et de traitement de l'information). En effet, un seul ordre est émis à partir de la télécommande, et non pas une pluralité d'ordres vers les différents équipements.

Le relais peut quant à lui être relié à une source d'alimentation électrique de manière filaire et gérer l'émission des différents ordres avec une puissance et donc une portée supérieure. On élimine ainsi également le risque qu'un équipement situé en limite de portée ne reçoive pas l'ordre émis par la télécommande nomade.

Comme cela a été vu plus haut, le relais peut comprendre des fonctions de réception de messages d'information, lui confirmant que l'ordre a bien été reçu et/ou exécuté par chaque équipement. Par la suite, le relais peut relayer cette information à la télécommande. L'interface utilisateur de la télécommande nomade peut donc être simplifiée, au profit de celle du relais, au niveau de laquelle l'utilisateur peut se rendre pour connaître la nature d'une erreur s'étant produite.

L'utilisation d'un relais permet également de gérer de manière plus complète l'ensemble des équipements du bâtiment. En effet, le relais ne se contente pas de retransmettre un ordre de commande de scénario issu de la télécommande, mais génère et émet des ordres particuliers adaptés aux différents équipements. Il permet la gestion de commande d'un ensemble très hétérogène d'équipements domotiques

Au moment du départ de l'utilisateur par exemple, il est souhaitable de ne pas se contenter d'un scénario dans lequel tous les équipements sont éteints. En effet, un utilisateur peut choisir de laisser une lumière extérieure allumée, éventuellement pendant un temps prédéterminé, de laisser tout ou partie des volets entrouverts, de mettre ou non l'alarme, selon que des personnes sont ou non encore présentes dans le bâtiment et d'enclencher ou non des moyens de simulation de présence.

La programmation des différents scénarii de départ se fait donc au niveau du relais. Le fait que le relais coopère avec un certain nombre de capteurs simplifie la programmation. En effet, il n'est pas nécessaire de programmer un nombre de scénarii fixes, mais uniquement un ensemble de réponses à des événements dont la survenue est fournie par les capteurs. Le scénario se construit donc en fonction de ces réponses. Ces aspects ne pourraient être réalisables au niveau de la télécommande nomade qu'au prix d'une intégration de l'ensemble des capteurs au niveau de cette même télécommande, alors que le boîtier relais peut utiliser des capteurs et automatismes utilisés par d'autres équipements.

Pour assurer la sécurité de l'installation, le relais peut permettre de retransmettre des ordres d'arrêt des dispositifs domotiques motorisés.

Dans le cas particulier où un seul scénario est défini dans le relais (par exemple, dans le cas où il n'existe pas d'autre scénario qu'un scénario de départ de l'utilisateur), le seul fait que le relais reçoive un message de la télécommande nomade est interprété comme un ordre spécifique de commande de l'exécution du scénario indépendamment du contenu du message reçu.

Un scénario peut également être mis en oeuvre directement par action de l'utilisateur au niveau du relais.

Avantageusement, le procédé de fonctionnement selon l'invention comprend une étape de retour d'information des équipements domotiques vers le relais pour signaler la bonne ou mauvaise réception et/ou exécution des ordres de commande.

De préférence, le procédé de fonctionnement selon l'invention comprend encore une étape de retour d'information du relais vers la télécommande nomade pour signaler la bonne ou mauvaise exécution du scénario.

## Revendications

1. Procédé de fonctionnement d'une installation domotique (1) comprenant une télécommande nomade (2), un relais (3) et des équipements domotiques (4, 7, 10, 11, 40, 41) équipant les ouvertures d'un bâtiment et dans laquelle au moins certains équipements domotiques peuvent recevoir par voie non filaire directement des ordres de commande émis par la télécommande nomade, le procédé étant tel que des ordres de commande sont émis sélectivement selon un scénario vers les équipements domotiques sur le même support de communication par le relais lors de la réception par celui-ci d'un ordre spécifique émis par la télécommande nomade à destination du relais et le procédé comprenant une étape de retour d'information du relais vers la télécommande nomade pour signaler la bonne ou mauvaise exécution du scénario.

2. Procédé de fonctionnement selon la revendication 1, **caractérisé en ce qu'**il comprend une étape préalable d'appairage du relais aux équipements domotiques et d'appairage du relais à la télécommande nomade.

3. Procédé de fonctionnement selon la revendication 1 ou 2, **caractérisé en ce qu'**il comprend, au niveau du relais, une étape préalable de définition du scénario déterminant les ordres de commande à émettre vers les équipements domotiques concernés par le scénario.

4. Procédé de fonctionnement selon la revendication 3, **caractérisé en ce que** l'étape de définition du scénario comprend une sous-étape de lecture au niveau du relais d'un état d'un sélecteur (39) et/ ou une sous-étape de détermination de données mesurées par des capteurs (6, 8, 13).

5. Procédé de fonctionnement selon la revendication 4, **caractérisé en ce qu'**il comprend une étape de mise en correspondance de données mesurées par des capteurs avec des actions des équipements domotiques, cette étape étant préalable à celle de définition du scénario.

6. Procédé de fonctionnement selon l'une des revendications précédentes, **caractérisé en ce que** le scénario est défini au niveau du relais.

7. Procédé de fonctionnement selon l'une des revendications précédentes, **caractérisé en ce que** les ordres de commande émis sélectivement vers les équipements domotiques sont générés au niveau du relais.

8. Procédé de fonctionnement selon l'une des revendications précédentes, **caractérisé en ce qu'**un scénario, préenregistré dans le relais, provoque, lorsqu'il est exécuté, la fermeture des accès à un bâtiment et l'extinction d'éclairages.

9. Procédé de fonctionnement selon l'une des revendications précédentes, **caractérisé en ce que** la télécommande affiche un message d'erreur si elle ne reçoit pas de message d'accusé de réception dans un délai prédéfini.

10. Procédé de fonctionnement selon l'une des revendications précédentes, **caractérisé en ce que** le procédé comprend une étape de retour d'information des équipements domotiques vers le relais pour signaler la bonne ou mauvaise réception et/ou exécution des ordres de commande.

11. Procédé de fonctionnement selon la revendication 10, **caractérisé en ce que** le relais établit un message d'information à l'attention de la télécommande, ce message reprenant de manière générale l'ensemble des messages d'information émis par les équipements, ce message étant positif lorsque tous les équipements concernés par le scénario ont confirme que l'ordre qu'ils avaient reçu a bien été exécuté et étant message négatif lorsqu'au moins un des équipements a signalé une erreur dans l'exécution de l'ordre.

12. Installation domotique (1) comprenant une télécommande nomade (2), un relais (3) et des équipements domotiques (4, 7, 10, 11, 40, 41) et dans laquelle au moins certains équipements domotiques peuvent recevoir par voie non filaire des ordres de commande émis par la télécommande nomade, **caractérisée en ce qu'**elle comprend des moyens matériels (21, 22, 24, 31, 32, 34) et logiciels pour mettre en oeuvre le procédé de fonctionnement selon l'une des revendications 1 à 11.

13. Installation domotique selon la revendication 12, **caractérisée en ce que** le relais comprend des moyens (32, 34) pour traduire un ordre de commande spécifique d'exécution du scénario en différents ordres de commande à l'attention des équipements domotiques.

14. Installation domotique selon la revendication 12 ou 13, **caractérisée en ce que** l'interface utilisateur de la télécommande nomade est simplifiée, au profit de l'interface utilisateur du relais, au niveau de laquelle l'utilisateur peut se rendre pour connaître la nature d'une erreur s'étant produite.

## Claims

1. Method for operating a home automation installation (1), including a mobile remote control (2), a relay (3), and home automation appliances (4, 7, 10, 11, 40, 41) that equip the openings of a building, and wherein at least some home automation appliances can receive directly control commands transmitted by the remote control through wireless means, the method being such that the control commands are selectively transmitted according to a scenario to the home automation appliances by the relay on the same communication support when a specific command transmitted by the mobile remote control to the relay is received by the latter, and the method comprises an information returning step from the relay to the mobile remote control in order to report the successful or unsuccessful execution of the scenario.

2. Operating method according to claim 1, **characterised in that** it comprises a preliminary step for pairing the relay to the home automation appliances and for pairing the relay to the mobile remote control.

3. Operating method according to claim 1 or 2, **characterised in that** it contains, at the level of the relay, a preliminary step of defining the scenario that determines the control commands to be transmitted to the home automation appliances involved in the scenario.

4. Operating method according to claim 3, **characterised in that** the step of defining the scenario includes a sub-step of reading, at the level of the relay, a state of a selector (39), and/or a sub-step of determining data measured by sensors (6, 8, 13).

5. Operating method according to claim 4, **characterised in that** it includes a step of setting into correspondence the data measured by sensors with the actions of the home automation appliances, this step being preliminary to the definition of the scenario.

6. Operating method according to any one of the preceding claims, **characterised in that** the scenario is defined at the level of the relay.

7. Operating method according to any one of the preceding claims, **characterised in that** the control commands selectively transmitted to the home automation appliances, are generated at the level of the relay.

8. Operating method according to any one of the preceding claims, **characterised in that** a scenario, stored before in the relay, provokes on its execution the closing of the entrances of a building and the switching off of the lighting.

9. Operating method according to any one of the preceding claims, **characterised in that** the remote control displays an error message if it does not receive any acknowledgement of reception within a predefined time period.

10. Operating method according to any one of the preceding claims, **characterised in that** the method comprises a step of returning the information from the home automation appliances to the relay in order to inform about a successful or an un successful receipt and/or execution of the control commands.

11. Operating method according to claim 10, **characterised in that** the relay establishes an information message for the remote control, this message repeating, in a general manner, all information messages transmitted by the appliances, this message being classified as positive if all appliances involved in the scenario have confirmed that the command they have received has been well executed, and being classified as negative if at least one of the appliances has communicated an error during the execution of the command.

12. Home automation installation (1), including a mobile remote control (2), a relay (3), and home automation appliances (4, 7, 10, 11, 40, 41), and wherein at least some home automation appliances can receive directly control commands transmitted by the remote control through wireless means, **characterised in that** it comprises hardware means (21, 22, 24, 31, 32, 34) and software for performing the operating method according to any one of claims 1 to 11.

13. Home automation installation according to claim 12, **characterised in that** the relay comprises means (32, 34) for translating a specific control command of the execution of the scenario into different control commands for the home automation appliances.

14. Home automation installation according to claim 12 or 13, **characterised in that** the user interface of the mobile remote control is simplified in favour of the user interface of the relay, to which the user may refer for knowing the kind of an error that has occurred.

## Patentansprüche

1. Verfahren zum Betrieb einer haustechnischen Anlage (1) mit einer mobilen Fernbedienung (2), einem Relais (3) und haustechnischen Einrichtungen (4, 7, 10, 11, 40, 41) an den Öffnungen eines Gebäudes, und bei welcher mindestens bestimmte haustechnische Einrichtungen unmittelbar von der mobilen Fernbedienung drahtlos übermittelte Steuerbefehle erhalten können, wobei das Verfahren derart ausgestaltet ist, dass den einzelnen haustechnischen Einrichtungen Steuerbefehle nach einem Ablaufschema selektiv durch das Relais über den gleichen Kommunikationsträger übermittelt werden, wenn das Relais einen spezifischen Befehl empfängt, den die mobile Fernbedienung in Richtung auf das Relais übermittelt hat, und wobei das Verfahren einen Schritt zur Rückmeldung vom Relais zur mobilen Fernbedienung umfasst, um eine fehlerhafte oder korrekte Ausführung des Ablaufschemas zu melden.

2. Betriebsverfahren nach Anspruch 1, **dadurch gekennzeichnet, dass** es als Vorstufe die Zuordnung des Relais zu den haustechnischen Einrichtungen und die Zuordnung des Relais zur mobilen Fernbedienung umfasst.

3. Betriebsverfahren nach Anspruch 1 oder 2, **dadurch gekennzeichnet, dass** es auf der Stufe des Relais einen vorgängigen Schritt zur Definition des Ablaufschemas umfasst, welches die im Verlaufe des Ablaufschemas zu den einzelnen haustechnischen Einrichtungen auszusendenden Steuerbefehle enthält.

4. Betriebsverfahren nach Anspruch 3, **dadurch gekennzeichnet, dass** der Schritt zur Definition des Ablaufschemas auf der Stufe des Relais einen Teilschritt zum Auslesen des Zustands eines Wählschalters (39) und/oder einen Teilschritt zur Bestimmung von Daten umfasst, die durch Sensoren (6, 8, 13) gemessen wurden.

5. Betriebsverfahren nach Anspruch 4, **dadurch gekennzeichnet, dass** es einen weiteren Schritt der Vorbereitung zum Austausch von Messwerten umfasst, welche bei den Betätigungen durch die haustechnischen Einrichtungen von Sensoren gemessen werden, wobei dieser Schritt vor demjenigen zur Definition des Ablaufschemas vorgenommen wird.

6. Betriebsverfahren nach einem der vorstehenden Ansprüche, **dadurch gekennzeichnet, dass** das Ablaufschema auf der Stufe des Relais definiert wird.

7. Betriebsverfahren nach einem der vorstehenden Ansprüche, **dadurch gekennzeichnet, dass** die Steuerbefehle, die selektiv zu den haustechnischen Einrichtungen übermittelt werden, auf der Stufe des Relais erzeugt werden.

8. Betriebsverfahren nach einem der vorstehenden Ansprüche, **dadurch gekennzeichnet, dass** ein im Relais zuvor gespeichertes Ablaufschema bei dessen Ausführung das Verschliessen des Zuganges zu einem Gebäude und das Ausschalten der Beleuchtungen verursacht.

9. Betriebsverfahren nach einem der vorstehenden Ansprüche, **dadurch gekennzeichnet, dass** die Fernbedienung eine Fehlermeldung anzeigt, wenn sie nach einer vorbestimmten Zeitdauer keine Empfangsbestätigung erhalten hat.

10. Betriebsverfahren nach einem der vorstehenden Ansprüche, **dadurch gekennzeichnet, dass** das Verfahren einen Schritt zur Rückmeldung von Informationen von den haustechnischen Einrichtungen an das Relais aufweist, um einen korrekten oder fehlerhaften Empfang und/oder eine korrekte oder fehlerhafte Ausführung der Steuerbefehle anzuzeigen.

11. Betriebsverfahren nach Anspruch 10, **dadurch gekennzeichnet, dass** das Relais eine Informationsmeldung für die Fernbedienung erzeugt, wobei diese Meldung allgemein sämtliche von den Einrichtungen abgesandte Informationsmeldungen aufnimmt und die Meldung als positiv gilt, wenn sämtliche vom Ablaufschema betroffene Einrichtungen bestätigt haben, dass die von ihnen empfangene Anweisung korrekt ausgeführt wurde, und als negativ eingestuft wird, wenn mindestens eine der Einrichtungen einen Fehler bei der Ausführung der Anweisung gemeldet hat.

12. Haustechnische Anlage (1), mit einer mobilen Fernbedienung (2), einem Relais (3) und haustechnischen Einrichtungen (4, 7, 10, 11, 40, 41), und bei welcher mindestens bestimmte einzelne haustechnische Einrichtungen drahtlose Steuerbefehle, die von der mobilen Fernbedienung ausgegeben wurden, über Funk erhalten können, **dadurch gekennzeichnet, dass** sie Hardwaremittel (21, 22, 24, 31, 32, 34) und Software zur Ausführung des Betriebsverfahrens nach einem der Ansprüche 1 bis 11 enthält.

13. Haustechnische Anlage nach Anspruch 12, **dadurch gekennzeichnet, dass** das Relais Mittel (32, 34) zur Übersetzung einer spezifischen Befehlsanweisung für die Ausführung des Ablaufschemas in Form unterschiedlicher Steuerbefehle an die haustechnischen Einrichtungen aufweist.

14. Haustechnische Anlage nach Anspruch 12 oder 13, **dadurch gekennzeichnet, dass** die Bedienerschnittstelle der mobilen Fernbedienung vereinfacht ist, und zwar zugunsten der Anwendungsschnittstelle des Relais, wobei der Benutzer diese Schnittstelle zu konsultieren hat, um die Art eines Fehlers, der aufgetreten ist, kennenzulernen.
